# EUROPÄISCHE PATENTSCHRIFT

(11) **EP 1 703 187 B1**
(45) Veröffentlichungstag und Bekanntmachung des Hinweises auf die Patenterteilung: **31.12.2008**
(21) Anmeldenummer: 05006014.4
(22) Anmeldetag: 18.03.2005
(51) Int. Cl.: F16L 1/10, B29C 65/78

(54) **Vorrichtung zum gegenseitigen Zentrieren von Rohrleitungsabschnitten**
Device for axial alignment of pipe sections
Dispositif pour positionnement en alignement axial de pièces de tuyaux

(43) Veröffentlichungstag der Anmeldung: 20.09.2006
(73) Patentinhaber: Max Streicher GmbH & Co. Kommanditgesellschaft auf Aktien, 94469 Deggendorf (DE)
(72) Erfinder: Huber, Siegmund, 94533 Buchhofen (DE)
(74) Vertreter: Manitz, Finsterwald & Partner GbR

(56) Entgegenhaltungen:
- EP-A- 0 586 297
- DE-A1- 19 533 949
- GB-A- 2 312 919
- US-A- 4 575 061
- US-A- 4 750 662

## Beschreibung

Die vorliegende Erfindung betrifft eine Vorrichtung zum gegenseitigen Zentrieren von Rohrleitungsabschnitten, wie sie insbesondere beim Verlegen von Pipelines verwendet wird.

Bei der Herstellung von Pipelines unterscheidet man den so genannten "Vorbau", bei dem über eine lange freie Strecke ein Rohrleitungsabschnitt an den anderen angesetzt und mit diesem verschweißt wird, und die so , genannten "Sonderbauwerke", bei denen die Rohrleitungsabschnitte über oder unter Hindernisse, wie beispielsweise Straßen, Flüsse oder dergleichen geführt werden müssen. Beim Vorbau werden die Rohrleitungsabschnitte meist in vorher aufgegrabene Erdrinnen verlegt; während bei den Sonderbauwerken oftmals zusätzliche Elemente, wie z. B. Schutzrohre verlegt werden, durch die die Rohrleitungsabschnitte dann hindurchgeführt werden.

Grundsätzlich ist es bei der Herstellung von Pipelines erforderlich, dass die miteinander zu verbindenden Rohrleitungsabschnitte mit ihren Enden so aneinander gesetzt werden, dass eine exakte Zentrierung der Rohrleitungsabschnitte gewährleistet ist. Nur bei einer solchen exakten Zentrierung können die Enden der aneinander stoßenden Rohrleitungsabschnitte zuverlässig miteinander verbunden, insbesondere verschweißt werden, wobei hier üblicherweise Orbitalschweißvorrichtungen zum Einsatz kommen.

Zum Zentrieren der Rohrleitungsabschnitte werden bei den bekannten Verfahren Innenzentrierungen verwendet. Dabei werden die aneinander zu setzenden Rohrleitungsabschnitte zunächst über so genannte Seitenbäume, das sind Bagger mit speziell ausgebildeten Hebearmen, in eine annähernd zentrierte Position gebracht. Jeder der Rohrleitungsabschnitte wird dabei durch einen oder durch mehrere Seitenbäume in der gewünschten Position gehalten. Anschließend wird die Innenzentrierung in das Innere eines der Rohrleitungsabschnitte eingesetzt und bis zur Verbindungsstelle zwischen den beiden Rohrleitungsabschnitten verfahren. Die Innenzentrierungen besitzen üblicherweise hydraulisch oder pneumatisch radial nach außen verfahrbare Kolben, die sternförmig nach außen verfahren werden können, bis sie an der Innenseite der Rohrleitungsabschnitte anliegen. Da die Innenzentrierung über die Verbindungsstelle von einem Rohrleitungsabschnitt in den anderen Rohrleitungsabschnitt hineinragt, werden beide Rohrleitungsabschnitte von innen mit den Kolben beaufschlagt, so dass eine Zentrierung der Rohrleitungsabschnitte zueinander erfolgt.

Die Zentrierung über diese Innenzentriervorrichtungen besitzen jedoch mehrere Nachteile. Zum einen sind die vorbereitende Positionierung sowie das Halten der Rohrleitungsabschnitte über mehrere Seitenbäume relativ aufwändig, da sowohl die Rohrleitungsabschnitte als auch die Seitenbäume ein sehr hohes Gewicht von mehreren zig Tonnen besitzen. Zum anderen ist das Einbringen der Innenzentrierrichtung in das Innere der Rohrleitungsabschnitte und insbesondere nach erfolgtem Verschweißen das Wiederentnehmen der Innenzentrierungen oftmals mit großem Aufwand verbunden, da die Innenzentrierungen bei langen Rohrleitungsabschnitten bis zu dem nächsten offenen Ende verfahren werden müssen.

Insbesondere, wenn die Verbindung zwischen den Rohrleitungsabschnitten über das so genannte Laserschweißen erfolgt, sind die bekannten Innenzentriervorrichtungen darüber hinaus nur bedingt einsetzbar. Beim Laserschweißen ist es erforderlich, dass die Enden der zu verbindenden Rohrleitungsabschnitte unter Vorspannung aneinander anliegen. Eine solche Vorspannung ist mit den bekannten Innenzentriervorrichtungen nicht erreichbar, da die hydraulischen oder pneumatischen Abstützelemente lediglich radial nach außen wirkende Kräfte auf die Rohrleitungsabschnitte übertragen können.

Die EP 0 586 279 A1 offenbart eine Vorrichtung zum gegenseitigen Zentrieren von zwei Rohrleitungsabschnitten gemäß dem Oberbegriff des Anspruchs 1, wobei die Halteelemente gegenüber dem Basisteil jeweils um eine eigene Achse verschwenkbar sind.

Die DE 195 33 949 A1 beschreibt eine Vorrichtung zum gegenseitigen Zentrieren von zwei Rohrleitungsabschnitten gemäß dem Oberbegriff des Anspruchs 1, wobei die Rohrleitungsabschnitte in Rohrschellen gelagert sind, die in Rohrleitungsrichtung verfahrbar und um jeweils eine eigene Achse senkrecht zur Rohrleitungslängsachse verschwenkbar sind.

Die US 4,750,662 beschreibt ebenfalls eine Vorrichtung zum gegenseitigen Zentrieren von zwei Rohrleitungsabschnitten gemäß dem Oberbegriff des Anspruchs 1, wobei Halteelemente der Vorrichtung durch Justierschrauben ausrichtbar sind, die die Lage der Rohrleitungsabschnitte unabhängig voneinander einstellbar festlegen.

Die US 4,575,061 betrifft eine Vorrichtung zum gegenseitigen Zentrieren von zwei Rohrleitungsabschnitten gemäß dem Oberbegriff des Anspruchs 1, wobei die Vorrichtung zumindest ein Halteelement umfasst, das bezüglich eines gemeinsamen Basiselements in axialer Richtung verschiebbar ist.

Es ist eine Aufgabe der vorliegenden Erfindung, eine Vorrichtung zum gegenseitigen Zentrieren von Rohrleitungsabschnitten anzugeben, die einfach einsetzbar ist, eine hochpräzise Zentrierung der Rohrleitungsabschnitte ermöglicht und auch für das Verbinden der Rohrleitungsabschnitte mittels Laserschweißen geeignet ist.

Diese Aufgabe wird durch eine Vorrichtung mit den Merkmalen des Anspruchs 1 gelöst.

Erfindungsgemäß werden somit zumindest zwei Halteelemente vorgesehen, mit denen die Rohrleitungsabschnitte sowohl ergriffen als auch positioniert werden können, wobei wesentlich ist, dass die Halteelemente jeweils an einem gemeinsamen Basisteil vorgesehen sind. Auf diese Weise entfällt die Notwendigkeit, die Rohrleitungsabschnitte durch zusätzliche Vorrichtungen, wie beispielsweise Seitenbäume, zu ergreifen und zunächst nur annähernd in die gewünschte Zentrierposition zu verbringen. Dadurch, dass die Halteelemente an einem gemeinsamen Basisteil vorgesehen sind, können sie gegenüber dem Basisteil so bewegbar ausgebildet sein, dass die von den Halteelementen gehaltenen Rohrleitungsabschnitte exakt zueinander zentrierbar sind, da die Halteelemente einen gemeinsamen Bezugspunkt besitzen. Durch die zusätzliche Möglichkeit, die Halteelemente gegeneinander zu bewegen, wird erreicht, dass zwei zueinander zentrierte, von den Halteelementen gehaltene Rohrleitungsabschnitte unter Vorspannung aneinander angesetzt werden können, so dass die mittels der erfindungsgemäßen Zentriervorrichtung gehaltenen Rohrleitungsabschnitte über das Laserschweißverfahren miteinander verschweißt werden können.

Mit der Erfindung werden somit die im Stand der Technik erforderlichen unterschiedlichen Vorrichtungen (mehrere Seitenbäume, Innenzentrierung) durch eine einzige Vorrichtung ersetzt, wobei durch die Ausbildung eines Basisteils als gemeinsamen Bezugspunkt eine exakte Zentrierung der Rohrleitungsabschnitte zueinander sowie eine genau vorgegebene Vorspannung der Rohrleitungsabschnitte zueinander möglich wird.

Erfindungemäß sind die Halteelemente zum automatischen Zentrieren der Rohrleitungsabschnitte ausgebildet. Eine sehr einfache automatische Zentrierung wird dadurch erreicht, dass die Halteelemente gegenüber dem Basisteil um eine gemeinsame Achse verschwenkbar ausgebildet sind. Insbesondere wenn die verschwenkbaren Halteelemente die gleiche Länge besitzen, so dass der wirksame Halteabstand, d. h. der Abstand zwischen der Schwenkachse des Halteelements und der Mittelachse eines gehaltenen Rohrleitungsabschnitts, für zwei Halteelemente gleich groß ist, so werden zwei von den beiden Halteelementen gehaltene Rohrleitungsabschnitte automatisch exakt zueinander zentriert, wenn sich die Halteelemente in der gleichen Winkelposition befinden. Zum Zentrieren ist es daher lediglich erforderlich, dass die Halteelemente in die gleiche Winkelposition verschwenkt werden, um eine automatisch zentrierte Ausrichtung der gehaltenen Rohrleitungsabschnitte zu erreichen. Grundsätzlich können die Halteelemente gegenüber dem Basisteil jedoch auch auf andere Weise bewegbar, z.B. verschiebbar sein. Die automatische Zentrierung kann dann durch eine geeignete Ansteuerung der Halteelemente erfolgen.

Bevorzugt umfassen die Halteelemente Halteabschnitte zum Ergreifen der Außenseite der Rohrleitungsabschnitte. Diese Halteabschnitte können dabei beispielsweise als Greifelemente, insbesondere als Greifzangen oder Greifbacken, und/oder als Vakuumgreifer bzw. Vakuuüzlift ausgebildet sein. Insbesondere sind die Halteabschnitte dabei so auszubilden, dass der Querschnittsmittelpunkt eines gehaltenen Rohrleitungsabschnitts bei einem vorgegebenen Durchmesser des Rohrleitungsabschnitts automatisch an derselben Position bezogen auf den Halteabschnitt zu liegen kommt.

Nach einer weiteren vorteilhaften Ausführungsform der Erfindung sind die Halteelemente entlang des Basisteils, insbesondere entlang einer Längsachse des Basisteils bzw. entlang der Schwenkachse der Halteelemente, gegeneinander verfahrbar ausgebildet. Dabei können entweder nur eines der Halteelemente oder beide bzw. alle Halteelemente entlang des Basisteils verfahrbar sein. Durch diese Verfahrbarkeit sowie die Anordnung der Halteelemente an einem gemeinsamen Basisteil wird erreicht, dass die von den Halteelementen gehaltenen Rohrleitungsabschnitte mit einer genau definierten Vorspannung aneinander gepresst werden können, so dass die Rohrleitungsabschnitte über das Laserschweißverfahren verbunden werden können.

Nach einer weiteren vorteilhaften Ausführungsform der Erfindung ist der Halteabschnitt eines Halteelements gegenüber dem restlichen Bereich des Halteelements verkippbar ausgebildet. Auf diese Weise können auch Rohrleitungsabschnitte mit schräg geschnittenen Enden zueinander zentriert werden, wenn beispielsweise die Pipeline mit einer Kurve verlegt wird oder ausgehend von einem horizontalen Pipelineverlauf der nächste Rohrleitungsabschnitt schräg nach oben oder nach unten geführt werden muss, um beispielsweise eine entsprechende Bodenunebenheit zu überbrücken.

Durch das Verkippen der Halteabschnitte eines Halteelements gegenüber dem restlichen Bereich des Halteelements kann ein definierter Winkel zwischen zwei aufeinander folgenden Rohrleitungsabschnitten eingestellt werden, so dass auch in diesem Fall eine exakte Zentrierung der schräg zueinander verlaufenden Rohrleitungsabschnitte ermöglicht wird. In diesem Fall ist unter Zentrierung nicht die fluchtende Aneinanderreihung von Rohrleitungsabschnitten zu verstehen, sondern lediglich die exakte Ausrichtung der Rohrleitungsabschnitte, so dass die Querschnittsmittelpunkte der schräg abgeschnittenen Enden aufeinander zu liegen kommen.

Nach einer weiteren vorteilhaften Ausführungsform der Erfindung ist an dem Basisteil, insbesondere zwischen den Halteelementen, eine Schweißvorrichtung vorgesehen. Auf diese Weise kann mit der erfindungsgemäßen Vorrichtung nicht nur das Zentrieren der Rohrleitungsabschnitte, sondern auch das Verschweißen der zentrierten Rohrleitungsabschnitte erfolgen.

Die Schweißvorrichtung ist bevorzugt als Laserschweißvorrichtung ausgebildet. Grundsätzlich ist jedoch die Ausbildung auch als Schutzgasschweißvorrichtung, als Lichtbogenschweißvorrichtung oder als sonstige geeignete Schweißvorrichtung möglich.

Nach einer weiteren bevorzugten Ausführungsform der Erfindung ist die Schweißvorrichtung als Orbitalschweißvorrichtung ausgebildet. Auf diese Weise kann die Verbindungsnaht zwischen den beiden zentrierten Rohrleitungsabschnitten in einem einzigen Arbeitsgang hergestellt werden.

Nach einer weiteren bevorzugten Ausführungsform der Erfindung ist an dem Basisteil, insbesondere zwischen den Halteelementen, eine Schneidvorrichtung vorgesehen. Die Schneidvorrichtung kann dabei beispielsweise einen Plasmabrenner oder eine sonstige geeignete Schneideinheit umfassen. Falls erforderlich, kann über die Schneidvorrichtung jeweils das Ende eines der gehaltenen Rohrleitungsabschnitte abgeschnitten werden, um so ein für den Schweißvorgang erforderliches exakt planes Ende der Rohrleitungsabschnitte zu erzielen.

Sowohl die Schweißvorrichtung als auch die Schneidvorrichtung können entlang des Basisteils verfahrbar ausgebildet sein, um auf diese Weise die Schneidvorrichtung bzw. die Schweißvorrichtung an die gewünschte Position verbringen zu können.

Nach einer weiteren vorteilhaften Ausführungsform der Erfindung sind an dem Basisteil drei, vier oder mehr Halteelemente vorgesehen. Insbesondere bei längeren Rohrleitungsabschnitten können mehr als nur zwei Halteelemente vorgesehen sein, um eine exakt waagerechte Ausrichtung der gehaltenen Rohrleitungsabschnitte zu ermöglichen, ohne dass zusätzliche Haltevorrichtungen, wie beispielsweise Seitenbäume oder Auflager, notwendig sind.

Vorteilhaft ist die Vorrichtung zur Montage an einem insbesondere verfahrbaren Unterbau, beispielsweise an einem Standardbagger oder an einer Standardraupe, ausgebildet. Durch diese modulare Bauweise ist die Zentriervorrichtung kostengünstig herstellbar. Zum anderen ist sie sehr flexibel einsetzbar, da sie insbesondere mobil einsetzbar ist und zusammen mit dem Unterbau verfahren werden kann.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnungen näher beschrieben, in diesen zeigen:
- Fig. 1: eine erfindungsgemäß ausgebildete Zentriervorrichtung während eines ersten Arbeitsschritts,
- Fig. 2: die Zentriervorrichtung nach Fig. 1 in einem darauf folgenden zweiten Arbeitsschritt,
- Fig. 3: die Zentriervorrichtung nach den Fig. 1 und 2 in einem dritten Arbeitsschritt und
- Fig. 4: eine Seitenansicht einer erfindungsgemäß ausgebildeten Zentriervorrichtung.

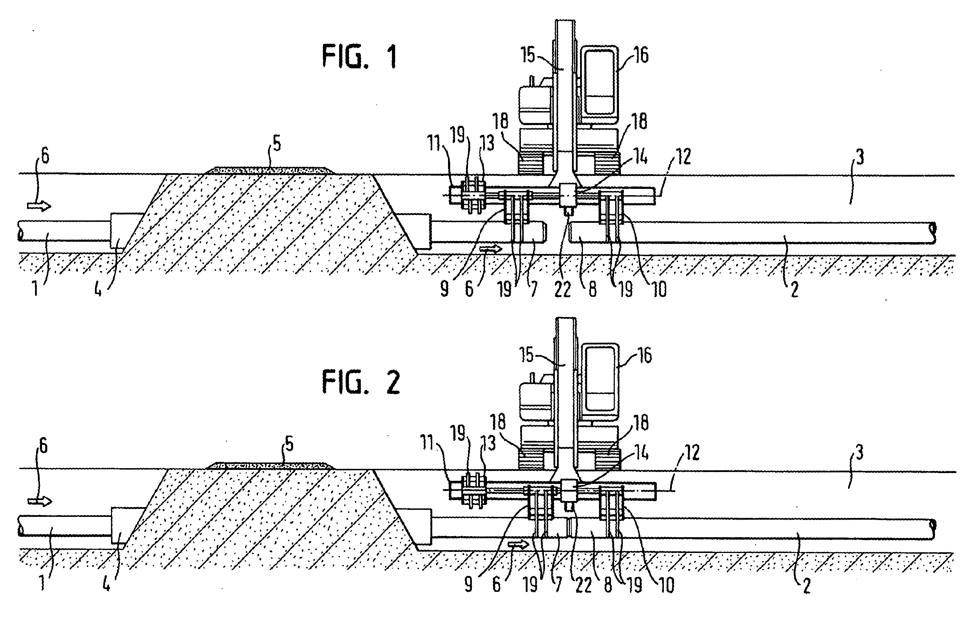

Fig. 1 zeigt zwei Rohrleitungsabschnitte 1, 2, die zum Erzeugen einer Pipeline zentriert aneinandergesetzt und miteinander verschweißt werden sollen. Der Rohrleitungsabschnitt 2 stellt dabei das Ende eines Vorbaus, d. h. eines aus vielen einzelnen Rohrleitungsabschnitten zusammengesetzten Pipelineabschnitts dar, der in einem im Erdboden ausgehobenen Graben 3 verlegt ist.

Der Rohrleitungsabschnitt 1 ist Teil eines Sonderbauwerks und ist durch ein Schutzrohr 4 geführt, das zur Unterquerung einer Straße 5 unterhalb des Straßenaufbaus durch den Erdboden verlegt ist.

Wie es durch Pfeile 6 angedeutet ist, ist der Rohrleitungsabschnitt 1 mit seinem in Fig. 1 links gelegenen Ende noch nicht an einem weiteren Rohrleitungsabschnitt befestigt, so dass der Rohrleitungsabschnitt 1 gemäß den Pfeilen 6 noch verschiebbar ist.

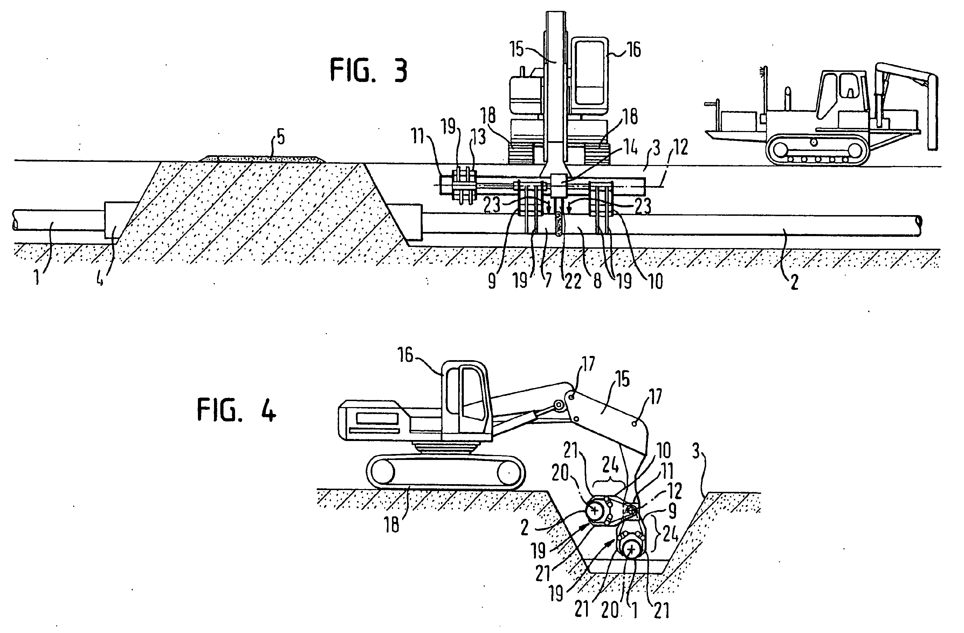

Die beiden zu verbindenden Enden 7, 8 der Rohrleitungsabschnitte 1, 2 werden jeweils an ihrer Außenseite von Halteelementen 9, 10 umgriffen und so gehalten, dass die Rohrleitungsabschnitte 1, 2 miteinander fluchten und somit zentriert zueinander ausgerichtet sind. Die Halteelemente 9, 10 sind dabei an einem gemeinsamen als Querträger ausgebildeten Basisteil 11 angeordnet und um eine gemeinsame Längsachse 12 des Basisteils 10 verschwenkbar, wie es insbesondere aus Fig. 4 deutlicher zu erkennen ist.

An dem Basisteil 11 ist ein weiteres Halteelement 13 sowie eine Schweißvorrichtung 14 vorgesehen, wobei die Schweißvorrichtung 14 zwischen den beiden Halteelementen 9 und 10 angeordnet ist.

Das Basisteil 11 ist an einem Ausleger 15 eines Baggers 16 montiert, wobei der Ausleger 15 in üblicher Weise über Gelenke 17 (Fig. 4) in unterschiedliche Positionen verschwenkbar ist.

Der Bagger 16 besitzt weiterhin zwei Raupen 18, so dass der Bagger 16 und zusammen mit diesem die erfindungsgemäße Zentriervorrichtung verfahren werden kann. Wie insbesondere deutlicher aus Fig. 4 hervorgeht, umfassen die Halteelemente 9, 10, 13 als Greifzangen 19 ausgebildete Halteabschnitte, wobei bei dem gezeigten Ausführungsbeispiel jedes Halteelement 9, 10, 13 zwei entsprechende Greifzangen 19 umfasst.

Die Greifzangen 19 sind so ausgebildet, dass beim Umfassen eines Rohrleitungsabschnitts 1, 2 der Querschnittsmittelpunkt 20 automatisch immer an derselben Stelle in der Mitte zwischen den Backen 21 der jeweiligen Greifzange 19 zu liegen kommt, wie es in Fig. 4 gezeigt ist.

Im Folgenden wird die Funktionsweise einer erfindungsgemäß ausgebildeten Zentriervorrichtung näher beschrieben:

Zu Beginn werden die zu zentrierenden Rohrleitungsabschnitte 1, 2 so positioniert, dass ihre Enden 7, 8 aufeinander zu weisen und einen Maximalabstand, der durch den Maximalabstand der Halteelemente 9, 10 vorgegeben ist, nicht überschreiten. Eine exakte und insbesondere zentrierte Ausrichtung, bei der sich die Rohrleitungsabschnitte berühren, ist zu diesem Zeitpunkt jedoch noch nicht erforderlich. Da bei der in Fig. 1 dargestellten Anordnung der Rohrleitungsabschnitt 2 als Ende eines Vorbaus unverschiebbar ist, wird demgemäß der Rohrleitungsabschnitt 1 entlang den Pfeilen 6 in Richtung auf den Rohrleitungsabschnitt 2 hin verschoben.

Anschließend wird der Bagger mit der erfindungsgemäßen Zentriervorrichtung so in Höhe der beiden Enden 7, 8 der Rohrleitungsabschnitte 1, 2 positioniert, dass der Rohrleitungsabschnitt 1 von dem Halteelement 9 und der Rohrleitungsabschnitt 2 von dem Halteelement 10 umgriffen werden kann, wie es in Fig. 1 dargestellt ist. Dazu können zum einen der Ausleger 15 des Baggers 16 um seine Gelenke 17 und zum anderen die Halteelemente 9, 10 um die Längsachse 12 entsprechend verschwenkt werden. Da die Halteelemente 9, 10 die Rohrleitungsabschnitte 1, 2 umgreifen, können sie diese anheben und in die gewünschte zueinander zentrierte Position verbringen. Diese zentrierte Position wird mit der dargestellten Ausführungsform automatisch dadurch erreicht, dass die Halteelemente 9, 10 den gleichen wirksamen Halteabstand 24 besitzen und aufgrund der geschilderten Ausführung der Greifzangen 19 die Rohrleitungsabschnitte 1, 2 automatisch mittig zwischen den Backen 21 der Greifzange 19 angeordnet sind. Ist beispielsweise, wie in Fig. 4 zur verbesserten Veranschaulichung in übertriebener Weise dargestellt, der Rohrleitungsabschnitt 2 gegenüber dem Rohrleitungsabschnitt 1 deutlich versetzt, so wird nach Ergreifen des Rohrleitungsabschnitts 1 durch das Halteelement 9 und des Rohrleitungsabschnitts 2 durch das Halteelement 10 sowie anschließendes Verschwenken des Halteelements 10 eine automatische Zentrierung der Rohrleitungsabschnitte 1 und 2 erreicht werden. Dabei ist lediglich dafür Sorge zu tragen, dass die Winkelpositionen der Halteelemente 9 und 10 übereinstimmen, da in diesem Fall automatisch die gewünschte Zentrierung erfolgt, wie sie in Fig. 1 dargestellt ist. Dies kann durch eine entsprechende Steuerungsvorrichtung für die Halteelemente 9, 10 erreicht werden.

Um die beiden Rohrleitungsabschnitte 1, 2 aneinander zur Anlage bringen zu können, sind die Halteelemente 9, 10 gegeneinander verfahrbar an dem Basisteil 11 angeordnet. Da bei dem Ausführungsbeispiel der Rohrleitungsabschnitt 2 unbeweglich ist, wird der Rohrleitungsabschnitt 1 durch Verfahren des Halteelements 9 gemäß dem Pfeil 6 parallel zur Längsachse 12 des Basisteils 11 so lange verschoben, bis sein stirnseitiges Ende an dem stirnseitigen Ende des Rohrleitungsabschnitts 2 zur Anlage kommt, wie es in Fig. 2 dargestellt ist. In diesem Zustand können die Rohrleitungsabschnitte 1 und 2 über ihren Umfang mittels der Schweißvorrichtung 14 miteinander verschweißt werden.

Handelt es sich bei der Schweißvorrichtung 14 um eine Laserschweißvorrichtung, so ist es möglich, durch die Halteelemente 9 und 10 die Rohrleitungsabschnitte 1, 2 unter Vorspannung gegeneinander zu halten. Die Schweißvorrichtung 14 umfasst einen Schweißkopf 22, der, wie in Fig. 3 gezeigt, in Richtung von Pfeilen 23 zu der Stoßstelle zwischen den beiden Rohrleitungsabschnitten 1 und 2 ausgefahren und im Sinne einer Orbitalschweißvorrichtung um die Stoßstelle herum verfahrbar ist, so dass die Rohrleitungsabschnitte 1 und 2 miteinander automatisch verschweißt werden können.

Während des gesamten Zentrier- und Schweißvorgangs werden die Rohrleitungsabschnitte 1 und 2 von den Halteelementen 9 und 10 unverrückbar in einer exakt zueinander zentrierten Position gehalten, da das Halteelement 9 sowie das Halteelement 10 über das gemeinsame Basisteil 11 miteinander verbunden sind. Ebenso kann durch die gemeinsame Anbringung an dem Basisteil 11 die gewünschte Vorspannung in genau definierter Weise erzeugt und beibehalten werden.

Nach vollständigem Verschweißen der Rohrleitungsabschnitte 1 und 2 können die Greifzangen 19 der Halteelemente 9, 10 geöffnet und die Rohrleitungen 1 und 2 damit freigegeben werden. Anschließend kann der Bagger 16 mit der Zentriervorrichtung zu der nächsten Verbindungsstelle verfahren werden, wo der nächste Rohrleitungsabschnitt in gleicher Weise mit dem freien Ende des Rohrleitungsabschnitts 1 zentriert und verschweißt wird.

### Bezugszeichenliste

- 1: Rohrleitungsabschnitt
- 2: Rohrleitungsabschnitt
- 3: Graben
- 4: Schutzrohr
- 5: Straße
- 6: Pfeile
- 7: Ende des Rohrleitungsabschnitts 1
- 8: Ende des Rohrleitungsabschnitts 2
- 9: Halteelement
- 10: Halteelement
- 11: Basisteil
- 12: Längsachse
- 13: Halteelement
- 14: Schweißvorrichtung
- 15: Ausleger
- 16: Bagger
- 17: Gelenke
- 18: Raupen
- 19: Greifzange
- 20: Querschnittsmittelpunkt
- 21: Backen
- 22: Schweißkopf
- 23: Pfeile
- 24: wirksamer Halteabstand der Halteelemente 9, 10, 13

## Patentansprüche

1. Vorrichtung zum gegenseitigen Zentrieren von Rohrleitungsabschnitten (1, 2),
welche ein gemeinsames Basisteil (11) aufweist, an dem zumindest zwei Halteelemente (9, 10, 13) zum Ergreifen und Positionieren der Rohrleitungsabschnitte (1, 2) bewegbar angeordnet sind,
wobei die Halteelemente (9, 10, 13) gegenüber dem Basisteil (11) bewegbar sind und gegeneinander so bewegbar sind, dass zwei zueinander zentrierte, von den Halteelementen (9,10, 13) gehaltene Rohrleitungsabschnitte (1, 2) unter Vorspannung gegeneinander anpressbar sind,
**dadurch gekennzeichnet,**
**dass** die Halteelemente (9, 10, 13) gegenüber dem Basisteil (11) um eine gemeinsame Achse (12) verschwenkbar ausgebildet sind.

2. Vorrichtung nach Anspruch 1,
**dadurch gekennzeichnet,**
**dass** der wirksame Halteabstand (24), d.h. der Abstand zwischen der Schwenkachse (12) des Halteelements (9, 10, 13) und der Mittelachse (20) eines gehaltenen Rohrleitungsabschnitts (1, 2), für zwei Halteelemente (9, 10, 13), insbesondere für alle Halteelemente (9, 10, 13) gleich groß ist.

3. Vorrichtung nach einem der vorhergehenden Ansprüche,
**dadurch gekennzeichnet,**
**dass** die Halteelemente (9, 10, 13) entlang des Basisteils (11) gegeneinander verfahrbar ausgebildet sind.

4. Vorrichtung nach einem der vorhergehenden Ansprüche,
**dadurch gekennzeichnet,**
**dass** die Halteelemente (9, 10, 13) Halteabschnitte zum Ergreifen der Außenseite der Rohrleitungsabschnitte (1, 2) umfassen.

5. Vorrichtung nach Anspruch 4,
**dadurch gekennzeichnet,**
**dass** zumindest ein Teil der Halteabschnitte als Greifelemente, insbesondere als Greifzangen (19) oder Greifbacken ausgebildet sind.

6. Vorrichtung nach Anspruch 5,
**dadurch gekennzeichnet,**
**dass** die Greifelemente als Greifzangen (19) ausgebildet sind, die derart gestaltet sind, dass beim Umfassen eines der Rohrleitungsabschnitte (1, 2) dessen Querschnittsmittelpunkt immer an derselben Stelle in der Mitte zwischen Backen (21) der Greifzange (19) zu liegen kommt.

7. Vorrichtung nach Anspruch 5 oder 6,
**dadurch gekennzeichnet,**
**dass** zumindest ein Teil der Halteabschnitte als Vakuumgreifer ausgebildet sind.

8. Vorrichtung nach einem der Ansprüche 4 bis 7,
**dadurch gekennzeichnet,**
**dass** der Halteabschnitt eines Halteelements (9, 10, 13) gegenüber dem restlichen Bereich des Halteelements verkippbar ausgebildet ist.

9. Vorrichtung nach einem der vorhergehenden Ansprüche,
**dadurch gekennzeichnet,**
**dass** an dem Basisteil (11), insbesondere zwischen den Halteelementen (9, 10, 13), eine Schweißvorrichtung (14) vorgesehen ist.

10. Vorrichtung nach Anspruch 9,
**dadurch gekennzeichnet,**
**dass** die Schweißvorrichtung (14) als Laserschweißvorrichtung ausgebildet ist.

11. Vorrichtung nach Anspruch 9 oder 10,
**dadurch gekennzeichnet,**
**dass** die Schweißvorrichtung (14) als Orbitalschweißvorrichtung ausgebildet ist.

12. Vorrichtung nach einem der vorhergehenden Ansprüche,
**dadurch gekennzeichnet,**
**dass** an dem Basisteil (11), insbesondere zwischen den Halteelementen (9, 10, 13), eine Schneidvorrichtung vorgesehen ist.

13. Vorrichtung nach Anspruch 12,
**dadurch gekennzeichnet,**
**dass** die Schneidvorrichtung einen Plasmabrenner umfasst.

14. Vorrichtung nach einem der vorhergehenden Ansprüche,
**dadurch gekennzeichnet,**
**dass** an dem Basisteil (11) drei, vier oder mehr Halteelemente (9, 10, 13) vorgesehen sind.

15. Vorrichtung nach einem der vorhergehenden Ansprüche,
**dadurch gekennzeichnet,**
**dass** die Vorrichtung zur Montage an einem insbesondere verfahrbaren Unterbau, beispielsweise an einem Standardbagger (16) oder an einer Standardraupe, ausgebildet ist.

## Claims

1. An apparatus for the mutual centring of pipe sections (1, 2),
which has a common base part (11) at which at least two holding elements (9, 10, 13) are movably arranged for the gripping and positioning of the pipe sections (1, 2),
wherein the holding elements (9, 10, 13) are movable with respect to the base part (11) and are movable with respect to one another such that two pipe sections (1, 2) centred to one another and held by the holding elements (9, 10, 13) can be pressed toward one another under prestress,
**characterised in that**
the holding elements (9, 10, 13) are made pivotable about a common axis (12) with respect to the base part (11).

2. An apparatus in accordance with claim 1, **characterised in that** the effective holding distance (24), i.e. the distance between the pivot axis (12) of the holding element (9, 10, 13) and the centre axis (20) of a held pipe section (1, 2), is of the same size for two holding elements (9, 10, 13), in particular for all holding elements (9, 10, 13).

3. An apparatus in accordance with any one of the preceding claims, **characterised in that** the holding elements (9, 10, 13) are made movable with respect to one another along the base part (11).

4. An apparatus in accordance with any one of the preceding claims, **characterised in that** the holding elements (9, 10, 13) include holding sections for the gripping of the outer side of the pipe sections (1, 2).

5. An apparatus in accordance with claim 4, **characterised in that** at least some of the holding sections are made as gripping elements, in particular as gripping tongs (19) or gripping jaws.

6. An apparatus in accordance with claim 5, **characterised in that** the gripping elements are made as gripping tongs (19) which are made such that, when one of the pipe sections (1, 2) is embraced, its cross-section centre always comes to rest at the same point in the centre between jaws (21) of the gripping tongs (19).

7. An apparatus in accordance with claim 5 or claim 6, **characterised in that** at least some of the holding sections are made as vacuum grippers.

8. An apparatus in accordance with any one of the claims 4 to 7, **characterised in that** the holding section of a holding element (9, 10, 13) is made tiltable with respect to the remaining region of the holding element.

9. An apparatus in accordance with any one of the preceding claims, **characterised in that** a welding apparatus (14) is provided at the base part (11), in particular between the holding elements (9, 10, 13).

10. An apparatus in accordance with claim 9, **characterised in that** the welding apparatus (14) is made as a laser welding apparatus.

11. An apparatus in accordance with claim 9 or claim 10, **characterised in that** the welding apparatus (14) is made as an orbital welding apparatus.

12. An apparatus in accordance with any one of the preceding claims, **characterised in that** a cutting apparatus (14) is provided at the base part (11), in particular between the holding elements (9, 10, 13).

13. An apparatus in accordance with claim 12, **characterised in that** the cutting apparatus includes a plasma torch.

14. An apparatus in accordance with any one of the preceding claims, **characterised in that** three, four or more holding elements (9, 10, 13) are provided at the base part (11).

15. An apparatus in accordance with any one of the preceding claims, **characterised in that** the apparatus is made for installation at a substructure, in particular at a movable substructure, for example at a standard excavator (16) or at a standard crawler.

## Revendications

1. Dispositif pour le centrage réciproque de tronçons de conduite tubulaire (1, 2),
qui comprend une partie de base commune (11) sur laquelle sont agencés de façon mobile au moins deux éléments de maintien (9, 10, 13) pour saisir et pour positionner les tronçons de conduite tubulaire (1, 2),
lesdits éléments de maintien (9, 10, 13) étant déplaçables par rapport à la partie de base (11), et déplaçables l'un par rapport à l'autre de telle façon que deux tronçons de conduite tubulaire (1, 2) mutuellement centrés et maintenus par les éléments de maintien (9, 10, 13) sont susceptibles d'être pressés l'un contre l'autre sous précontrainte,
**caractérisé en ce que**
les éléments de maintien (9, 10, 13) sont réalisés avec capacité de pivotement autour d'un axe commun (12) par rapport à la partie de base (11).

2. Dispositif selon la revendication 1,
**caractérisé en ce que** l'écart de maintien efficace (24), c'est-à-dire la distance entre l'axe de pivotement (12) de l'élément de maintien (9, 10, 13) et l'axe central (20) d'un tronçon de conduite tubulaire (1, 2) maintenu est égal pour deux éléments de maintien (9, 10, 13), en particulier pour tous les éléments de maintien (9, 10, 13).

3. Dispositif selon l'une des revendications précédentes,
**caractérisé en ce que** les éléments de maintien (9, 10, 13) sont réalisés avec possibilité de déplacement l'un par rapport à l'autre le long de la partie de base (11).

4. Dispositif selon l'une des revendications précédentes,
**caractérisé en ce que** les éléments de maintien (9, 10, 13) comprennent des tronçons de maintien pour saisir le côté extérieur des tronçons de conduite tubulaire (1, 2).

5. Dispositif selon la revendication 4,
**caractérisé en ce qu'**une partie au moins des tronçons de maintien sont réalisés sous forme d'éléments de préhension, en particulier de pinces de préhension (19) ou de mâchoires de préhension.

6. Dispositif selon la revendication 5,
**caractérisé en ce que** les éléments de préhension sont réalisés sous forme de pinces de préhension (19), lesquelles sont ainsi conçues que lorsqu'elles entourent l'un des tronçons de conduite tubulaire (1, 2), le centre de sa section transversale vient toujours se placer au même emplacement au milieu entre les mâchoires (21) de la pince de préhension (19).

7. Dispositif selon la revendication 5 ou 6,
**caractérisé en ce qu'**une partie au moins des tronçons de maintien sont réalisés sous forme d'éléments de préhension à succion.

8. Dispositif selon l'une des revendications 4 à 7,
**caractérisé en ce que** le tronçon de maintien d'un élément de maintien (9, 10, 13) est réalisé avec possibilité de basculement par rapport à la région restante de l'élément de maintien.

9. Dispositif selon l'une des revendications précédentes,
**caractérisé en ce qu'**un dispositif de soudage (14) est prévu sur la partie de base (11), en particulier entre les éléments de maintien (9, 10, 13).

10. Dispositif selon la revendication 9,
**caractérisé en ce que** le dispositif de soudage (14) est réalisé sous forme de dispositif de soudage à laser.

11. Dispositif selon la revendication 9 ou 10,
**caractérisé en ce que** le dispositif de soudage (14) est réalisé sous forme de dispositif de soudage orbital.

12. Dispositif selon l'une des revendications précédentes,
**caractérisé en ce qu'**il est prévu un dispositif de coupe sur la partie de base (11), en particulier entre les éléments de maintien (9, 10, 13).

13. Dispositif selon la revendication 12,
**caractérisé en ce que** le dispositif de coupe comprend une torche à plasma.

14. Dispositif selon l'une des revendications précédentes,
**caractérisé en ce qu'**il est prévu trois, quatre éléments de maintien (9, 10, 13) ou plus sur la partie de base (11).

15. Dispositif selon l'une des revendications précédentes,
**caractérisé en ce que** le dispositif est réalisé pour le montage sur une sous-structure, en particulier déplaçable, en particulier sur une pelleteuse standard (16) ou sur une machine à chenilles standard.
